# EUROPEAN PATENT APPLICATION

(11) **EP 2 821 512 A1**
(43) Date of publication of application: **07.01.2015**
(21) Application number: 14164266.0
(22) Date of filing: 10.04.2014
(51) Int. Cl.: C22B 7/00

(54) **Method and apparatus for the direct reduction of iron oxides**

(30) Priority: 17.05.2013 PL 40392313
(71) Applicant: Biuro Rozwoju i Wdrozen BRiW Posiadalo s.j., 97-225 Ujazd (PL)
(72) Inventor: Posiada o, S awomir, 97-225 Ujazd (PL)
(74) Representative: Rumpel, Alicja

(57) **Abstract**

The method of direct reduction of iron oxides, in which the in which the charge material free of petroleum derivative and mineral contaminants is dosed into the chamber (2) of the rotating reactor, and then the reduced output material reduced to iron is melted in the siphon furnace (3) and the method of purification of the charge material of petroleum derivative and mineral contaminants in the apparatus and the installation according to the invention P-395190, after which it is collected in the de-oiled iron oxides tank; later it is introduced into the initial direct reduction chamber (1), while simultaneously introducing the synthesis gas into that chamber (1), after which the mixture of the charge material and the synthesis gas is transferred to the proper direct reduction chamber (2), from which volatile substrate reaction compounds are removed after the reduction, and the metals obtained after the direct reduction process are later introduced into the melting furnace (3), in which the metallic fractions are separated and solid waste in the form of slag is removed.

The apparatus/ the installation for the reduction of iron oxides, containing the installation/the apparatus for de-oiling of steelworks waste together with the chamber (4) according to the invention P-395190, the installation for decomposition of polymer waste (7), the initial direct reduction chamber (1), the proper direct reduction chamber (2), volatile substances outlet and the melting furnace (3).

## Description

The subject matter of the invention is the method and the installation for the direct reduction (DRI- Direct-Reduced Iron) of metal oxides, and especially iron and zinc oxides, which enables metal recovery (especially iron and zinc) from steelworks waste.

In the light of existing problems faced by steelworks which operate on the basis of blast furnaces and the increasing iron demand, it seems justifiable to look for alternative methods of iron production. The gradual increase of DRI- Direct Iron Reduction processes in the whole iron production from the ore in the global scale can be observed. This is due, among others, to much lower energy outlays when compared with the consumption of energy in the blast furnace process, which is characterised by the greatest share in the total quantity of energy required for the production of 1 mg of steel of between 70 and 80%. Moreover, an increasing problem related to the deficit of coking coal which is the source of heat and reducer operation in blast furnace processes can also be observed. On the other hand, direct reduction processes offer the possibility of using a gas reducer. The increase of importance of DRI processes is also due to excessive accumulation of harmful elements, such as Cu, Sn, As or Zn and others in steel as a result of the increasing application of steel goods recirculation. This method enables the dilution of additives in the steelworks process by using sponge iron, which is the product of the DRI process. Therefore the DRI product can be considered a full-value charge in all steelworks processes.

Steelworks waste containing zinc is one of the unquestioned problems of steelworks. Over the years steelworks have developed steelworks waste handling procedures; however the zinc containing waste continues to be a huge problem. Such waste due to the content of petroleum derivatives and zinc, which damage fireproof lining of the blast furnace (among others), cannot be returned into the process. Due to that fact the amount of such waste keeps increasing at landfills, and the noxious substances contained in it contaminates the environment.

According to available literature, due to significant outlays required for the construction of a reduction installation (directly connected to the structure of the ironworks facility) and also due to low flexibility of the direct reduction process three main direct metal reduction methods can be applied: MIDREX with the capacity of up to 23 Mt/year, HyL (I, II and III) with the capacity of up to 7 Mt/year and FIOR with the capacity of up to 0.5 Mt/year.

Due to the requirement of the greater flexibility of production, which is due to significant dispersion of steel purchasers and high specification of orders, the state-of-the-art technologies have been implemented, which are referred to in the literature as FASTMET, IRON CARBIDE, CIRCORED, INMETCO and FINMET; they are currently at the testing stage and their capacity is quite low (it does not exceed 0.5 Mt/year). These methods are based on the principle of charge reduction and the reduction of reaction chambers, and the first sites constructed according to this technology have not reached yet their full production capacity. These methods are also listed in the patent literature.

The description of the invention WO2012034015 presents the structure and method of the direct reduction of iron, according to which the charge material is heated in the openwork, rotating drum and at the same time it is subject to the impact of the reduction medium. The contaminants of the charge material are sieved through the material of the rotating drum and a slight longitudinal inclination of the drum axis ensures the independent transport of the charge material during direct reduction. However, the reduction process is quite slow, which is due to the structure of the rotating drum and the need to ensure control of air access and the drying requirements during the process, and later the control of the degree of carbonisation and fragmentation of contaminants sieved through the drum. This results in the high energy demand of the process executed according to the patent discussed herein and in the need to introduce into the process buffer quantities of the charge material and synthesis gas with the view to obtaining the designed quantity of pure iron.

On the other hand, the description of MX2010002075 reveals the method of direct reduction of iron, in which the gas containing carbon and sulphur compounds is heated before its introduction into the reactor chamber, and then it is filtered through the bed with the charge material. The temperature of the gas when passing through the bed is between 750°C and 1100°C. The reactor chamber is hermetic, which enables gas recirculation through the bed, but which at the same time requires the use of additional pumps for gas pumping and the time required at each occasion of gas heating (before its introduction into the bed) and its energy demand reduces the economic rationale of applying this solution. Additionally, the gas introduced into the reactor cools down as a result of contact with the charge material, which further increases energy expenses under the process.

On the other hand, the description of the invention EP1036203 presents the method of direct reduction of iron, according to which the reduction process is controlled by means of the simultaneous introduction of water and oxygen together with the gas, in the proportion defined by the required conditions of the process. Carbon content depends on the amount of water introduced into the reactor, and the addition of oxygen ensures energy required for the carburisation of iron obtained in the process. The inconvenience of this method, just like in the case of blast furnaces, is high process inertia and the susceptibility to uncontrolled pressure changes of water vapour and temperature in the reactor chamber. Such faulty reduction processes can result in the stoppages of DRI installation, which have been described in the literature, and also of blast furnace melting installations, which usually are presented for comparison purposes.

Therefore it has seemed purposeful to develop the direct reduction method of iron oxides, under which it would be possible to obtain the metallic iron with high parameters using minimum energy input and stoichiometric quantities of the charge material. The purpose of this invention was also the elimination of the need to ensure reagent reserve in the form of stock oxides amount and stock amount of the reactive gas introduced into the reactors, so characteristic for the known processes. At the same time also the reduction method and the direct reduction apparatus specified in the invention enable complete waste purification of zinc and other contaminants, the presence of which is not required in blast furnace iron casting processes. Such conditions are ensured by the method and the apparatus (the installation) according to the invention.

The method of direct reduction of iron oxides according to the invention consists in dosing the charge material stripped of petroleum derivative and mineral contaminates, preferably using a cascade dispenser to a rotating redactor, and then the input material reduced to iron and other metals is melted in the siphon furnace.

The elimination of petroleum derivative and mineral contaminants from the charge material is effected using the method according to the invention P-395190, under which the steelworks waste with zinc, and especially oily scale is introduced onto the palette conveyor situated in the heating chamber, and then the whole length of oily steelworks waste is transferred using a palette conveyor below the heating plate of the heating chamber of the de-oiler, in which the decomposition and the evaporation of the mixture of hydrocarbons and water vapour takes place, after which the de-oiling process products are received in the form of the purified steelworks waste; the whole process is executed using an installation according to the invention P-395190, in which the heating chamber of the de-oiler has at least the following separate areas:
- The dosing area
- The water vapour reception area
- The heating area
- The end products reception area, and the purified charge material in the form of purified and fully de-oiled steelworks waste is collected in the de-oiled iron oxides tank and it is introduced into the initial direct reduction chamber, preferably equipped with the cascade conveyer. It must be noted that the introduction of purified iron oxides into the initial direct reduction chamber takes place simultaneously with the introduction of synthesis gas into that chamber.

The synthesis gas is transferred from the flow conveyor preferably connected to the installation for decomposition of polymer waste, in which the disintegrated input material- polymer waste is continuously transferred using a cell dispenser onto the tray conveyor and it is subject to thermal processing, involving the recovery of hydrocarbon compounds; such thermal processing is a two-stage process, and it takes place at least in one pre-processing chamber- the melting crucible, where the charge material is plasticised and liquefied through the supply of thermal energy, after which it is continually transferred to at least one final processing chamber- the evaporator, where under the full pyrolysis process liquid polymers are subject to decomposition consisting in the breaking of long, multi-particle chains of hydrocarbons into shorter chains with carbon atom quantity corresponding to respective gas and liquid hydrocarbon fractions.

In the condensing block of the installation described herein the hydrocarbon fractions are separated into a liquid and a gas one, and the gas fraction with C1-C4 hydrocarbon content is collected in the buffer tank and it is continuously transferred into the flow reactor, where the C1-C4 gas fractions are converted into H2/CO synthesis gas. Thus obtained synthesis gas is pumped into the buffer tank and heated, after which it is introduced into the initial direct reaction chamber. Depending on the temperature of the introduced purified steelworks waste, introduced into the initial direct reaction chamber, the synthesis gas needs to be heated to the temperature of between 400 and 800 degrees C.

Both substrates introduced into the initial direct reaction chamber are dosed in the stoichiometric ratio, resulting from the reduction reaction of iron oxides.

In the initial direct reaction chamber the reduction process is initiated as a result of the contact between synthesis gas and the mixture of oxides transferred to the initial direct reaction chamber. The temperature of reduction reaction taking place in the initial direct reaction chamber is an arithmetic mean of temperatures of process reagents introduced into the initial direct reaction chamber: metal oxides and synthesis gas, as well as the temperature acquired by the heating system of the initial chamber. The synthesis gas which also performs the role of the metal oxides medium flows together with the oxides along the initial direct reaction chamber to the proper direct reaction chamber.

During the introduction of substrates into the proper direct reduction chamber they are heated, thanks to which their temperature does not exceed 1050 degrees C and is not lower than 900 degrees C.

The substrates introduced into the proper direct reduction chamber form "a theoretical suspension disc", which is the mixture of substrates in stoichiometric proportions. The condition for the creation of the theoretical suspension disc is the correlation of transferring speed of the unit volume of synthesis gas(in the form of a theoretical gas disc) in the proper direct reduction chamber with the transferring speed of the unit mass of iron oxides in the proper direct reduction chamber; the transferring speed of the unit mass of iron oxides dispersed in the theoretical gas disc is the function of the angle of the proper direct reduction chamber inclination and the rotating speed of the proper direct reduction chamber drum.

It must be noted that after the introduction of substrates into the proper direct reduction chamber they are transferred along the rotating drum located in the proper direct reduction chamber and they are preferably mixed with the view to the maximum unfolding of the reaction surface. The gases produced as a result of the direct reduction are removed from the proper direct reduction chamber, and the gas intake is located in the area of the proper direct reduction chamber with the temperature exceeding 900 degrees C, since in that very temperature the zinc reduced from the oxides becomes volatile and is removed from the chamber.

The gas mixture of waste products in the form of reaction gases and zinc vapours as well as other volatile chemical compounds is removed from the proper direct reduction chamber. The mixture of gases after leaving the proper direct reduction chamber is transferred through at least one filter, separating the zinc from the gas mixture, which is later filtered through a filter assembly, preferably a water one.

The reduced iron together with a post-reaction slag after leaving the proper direct reduction chamber in introduced into the melting furnace using a screw conveyor.

The product from the proper direct reduction chamber in the form of reduced iron, post-reaction slag, as well as iron and zinc oxides which are the remnants of the partial reaction, is introduced into the melting furnace using a screw conveyor, in which it is heated to the temperature of at least 1500 degrees C, and the furnace structure enables the separation of metallic iron from the remaining product components, using a difference in density. The output material in the form of pure, liquid iron is received continually from the melting furnace.
The whole process according to the invention takes place in a closed, hermetically tight space.

The apparatus for the direct reduction of iron oxides according to the invention contains an installation/ an apparatus for de-oiling steelworks waste according to the invention P-395190, an apparatus for the decomposition of polymer waste, a condensing block, a buffer tank, the initial direct reduction chamber, the proper direct reduction chamber and the melting furnace. In the de-oiler heating chamber according to P-395190 a palette conveyor is located, which transfers the whole length of oily steelworks waste below the heating plate of the de-oiler heating chamber, in which the decomposition and the evaporation of the mixture of hydrocarbons and water vapour takes place during the transport through the following areas:
- The dosing area
- The water vapour reception area
- The heating area
- The end products reception area, which is connected directly to the initial direct reaction chamber together with the installation for the decomposition of polymer waste, in which the disintegrated input material- polymer waste is continuously transferred using a cell dispenser onto the tray conveyor and it is subject to thermal processing, involving the recovery of hydrocarbon compounds; such thermal processing is a two-stage process, and it takes place at least in one pre-processing chamber- the melting crucible, where the charge material is plasticised and liquefied through the supply of thermal energy, after which it is continually transferred to at least one final processing chamber- the evaporator, where under the full pyrolysis process liquid polymers are subject to decomposition consisting in the breaking of long, multi-particle chains of hydrocarbons into shorter chains with carbon atom quantity corresponding to respective gas and liquid hydrocarbon fractions.

The installation for the decomposition of polymer waste is equipped with a condensing block, in which the hydrocarbon fractions are separated into a liquid and a gas one, and the condensing block is equipped with the directly connected buffer tank for gas fraction with C1-C4 hydrocarbon content; such buffer tank is connected to the flow reactor, in which the C1-C4 gas fractions are converted into H2/CO synthesis gas. The flow reactor is equipped with the buffer tank of the flow reactor, connected to the initial direct reaction chamber. The connection fittings of the flow reactor buffer tank are equipped with the heat sources that heat up the synthesis gas transferred to the initial direct reaction chamber.

The initial direct reaction chamber has a form of a shaft equipped with alternately placed shelves and it has its own heating system; the initial direct reaction chamber is connected by means of a conveyor, preferably a cell one, with the steelworks waste de-oiling apparatus/ installation according to the invention P-395190, and the structure of the initial direct reaction chamber, preferably the structure of the shelves located therein, contains the synthesis gas connection.

The initial direct reaction chamber is directly connected to the proper direct reaction chamber, inside which a rotating drum is located, preferably equipped with the transferring blades. The rotating speed of the drum is regulated by means of a controller, connected to the engine propelling the drum. The rotating drum is located inside the roller on the surface of which the heating system is located, which is the source of energy required for conducting the DRI process. The operation of the heating system is controlled by the control system, which ensures the maintenance of a fixed set temperature inside the rotating drum. The proper direct reaction chamber is equipped with the discharge of volatile substances of the direct reaction, and the outlet of the proper direct reaction chamber is connected to the melting furnace by means of a screw conveyor.

The melting furnace has a syphon structure; it is made from a U-shaped tube, preferably with the inside diameter of 500 mm. The lowest melting furnace point is equipped with the discharge valve, and the pure iron and slag outlets are located between the discharge valve and the upper furnace edge. The pure iron and slag outlets are not located on the same "arm" of the U-shaped furnace. The slag outlet is located below the melted iron surface, above the entry to the melting furnace, and the melted iron outlet is located on the second furnace "arm"; thus the outlet of the metallically pure iron is not located at the same height as the slag outlet on the first furnace "arm", but below this level.

The direct reduction method according to the invention offers the possibility of processing all types of steelworks waste, and most importantly zinc containing waste. At the same time it allows for the use of polymer waste, mainly originating from plastics, for the production of the reducing medium, i.e. the synthesis gas. The manner of introduction of reagents of the DRI process into the reduction chamber, consisting in continuous and repeatable dosing in the established stoichiometric proportions per time unit offers the possibility of process control at each stage of its execution. Moreover, it enables process interruption in a situation of fault at each process stage and the resumption of production at the shortest possible time. High degree of material disintegration ensures significant proper surface and thus the active surface of the process, thanks to which the unit material reduction process can be executed in the shortest possible time at the highest reaction degree. Low level of general energy outlays under the process is possible thanks to the fact that the substrates are introduced into the area of the reaction chamber at the temperature close to the optimum DRI process temperature, preferably at the temperature of 800 degrees C. It should be remembered that the reaction temperature is acquired by the steelworks waste in the de-oiling process and by the synthesis gas in the process of gas conversion of the C1-C4 mixture of the polymer waste decomposition product.

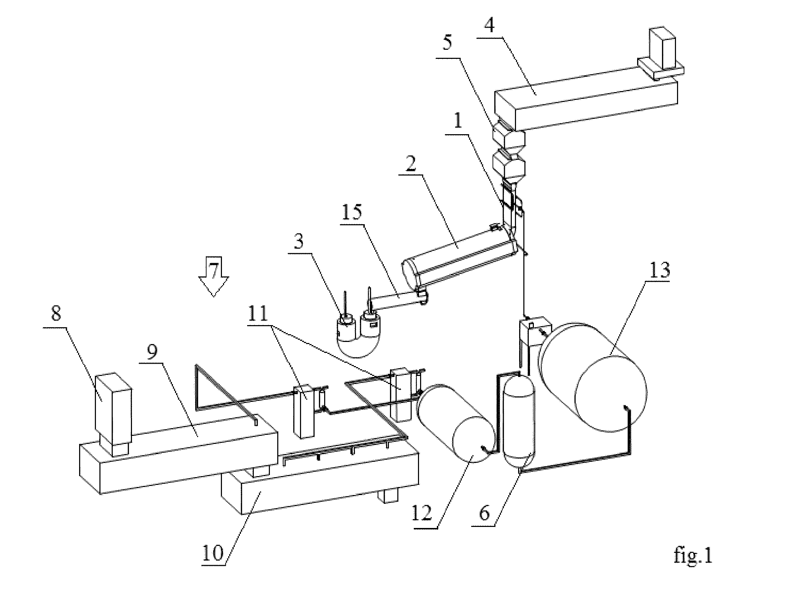

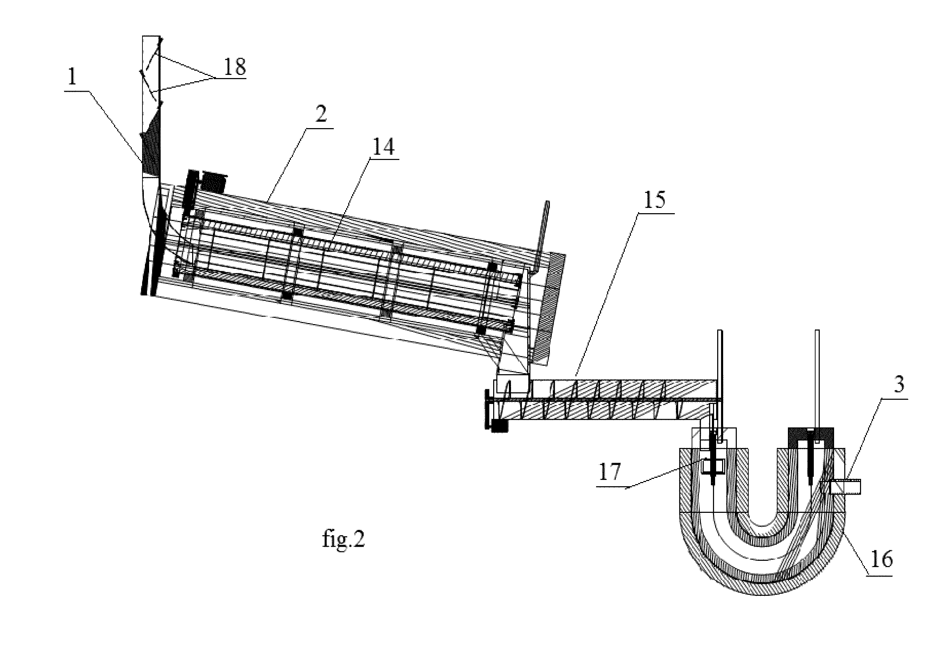

The method and apparatus/ the installation according to the invention have been presented in figure 1, which shows the diagram and location of apparatus/ installation elements according to the invention, while figure 2 presents the diagram of direct reduction chambers.

### Example

The method according to the invention consists in dosing the charge material stripped of petroleum derivative and mineral contaminates, using a cascade dispenser placed in initial direct reduction chamber 1 to a rotating redactor placed in the direct reduction chamber 2, and then the input material reduced to iron and other metals is melted in the siphon furnace 3.

The elimination of petroleum derivative and mineral contaminants from the charge material is effected using the method according to the invention P-395190, under which the oily steelworks waste, and especially oily scale is introduced onto the palette conveyor situated in the de-oiler 4 heating chamber, and then the whole length of oily steelworks waste is transferred using a palette conveyor below the heating plate of the heating chamber of the de-oiler 4, in which the decomposition and the evaporation of the mixture of hydrocarbons and water vapour takes place, after which the de-oiling process products are received in the form of the purified steelworks waste; the whole process is executed using an installation according to the invention P-395190, in which the heating chamber of the de-oiler 4 has at least the following separate areas:
- The dosing area
- The water vapour reception area
- The heating area
- The end products reception area, and the purified charge material in the form of purified and fully de-oiled steelworks waste is collected in the de-oiled iron oxides tank 5 and it is introduced into the initial direct reduction chamber 1, preferably equipped with the cascade conveyer. It must be noted that the introduction of purified iron oxides into the initial direct reduction chamber 1 takes place simultaneously with the introduction of synthesis gas into that chamber 1.

The synthesis gas is transferred from the flow conveyor 6 preferably connected to the installation 7 for decomposition of polymer waste, in which the disintegrated input material- polymer waste is continuously transferred using a cell dispenser 8 onto the tray conveyor and it is subject to thermal processing, involving the recovery of hydrocarbon compounds; such thermal processing is a two-stage process, and it takes place at least in one pre-processing chamber- the melting crucible 9, where the charge material is plasticised and liquefied through the supply of thermal energy, after which it is continually transferred to at least one final processing chamber- the evaporator 10, where under the full pyrolysis process liquid polymers are subject to decomposition consisting in the breaking of long, multi-particle chains of hydrocarbons into shorter chains with carbon atom quantity corresponding to respective gas and liquid hydrocarbon fractions.

In the condensing block 11 of the installation 7 described herein the hydrocarbon fractions are separated into a liquid and a gas one, and the gas fraction with C1-C4 hydrocarbon content is collected in the buffer tank 12 and it is continuously transferred into the flow reactor 6, where the C1-C4 gas fractions are converted into H2/CO synthesis gas. Thus obtained synthesis gas is pumped into the buffer tank 13 and heated, after which it is introduced into the initial direct reaction chamber 1. Depending on the temperature of the introduced purified steelworks waste, introduced into the initial direct reaction chamber 1, the synthesis gas needs to be heated to the temperature of between 400 and 800 degrees C.

Both substrates introduced into the initial direct reaction chamber 1 are dosed in the stoichiometric ratio, resulting from the reduction reaction of iron oxides.

In the initial direct reaction chamber 1 the reduction process is initiated as a result of the contact between synthesis gas and the mixture of oxides transferred to the initial direct reaction chamber 1. The temperature of reduction reaction taking place in the initial direct reaction chamber 1 is an arithmetic mean of temperatures of process reagents introduced into the initial direct reaction chamber: metal oxides and synthesis gas, as well as the temperature acquired by the heating system of the initial chamber 1. The synthesis gas which also performs the role of the metal oxides medium flows together with the oxides along the initial direct reaction chamber 1 to the proper direct reaction chamber 2.

During the introduction of substrates into the proper direct reduction chamber 2 they are heated, thanks to which their temperature does not exceed 1050 degrees C and is not lower than 900 degrees C.

The substrates introduced into the proper direct reduction chamber 2 form "a theoretical suspension disc", which is the mixture of substrates in stoichiometric proportions. The condition for the creation of the theoretical suspension disc is the correlation of transferring speed of the unit volume of synthesis gas (in the form of a theoretical gas disc) in the proper direct reduction chamber 2 with the transferring speed of the unit mass of iron oxides in the proper direct reduction chamber; the transferring speed of the unit mass of iron oxides dispersed in the theoretical gas disc is the function of the angle of the proper direct reduction chamber 2 inclination and the rotating speed of the proper direct reduction chamber 2 drum.

It must be noted that after the introduction of substrates into the proper direct reduction chamber 2 they are transferred along the rotating drum 14 located in the proper direct reduction chamber 2 and they are preferably mixed with the view to the maximum unfolding of the reaction surface. The gases produced as a result of the direct reduction are removed from the proper direct reduction chamber 2, and the gas intake is located in the area of the proper direct reduction chamber 2 with the temperature exceeding 900 degrees C, since in that very temperature the zinc reduced from the oxides becomes volatile and is removed from the chamber 2.

The gas mixture of waste products in the form of reaction gases and zinc vapours as well as other volatile chemical compounds is removed from the proper direct reduction chamber 2. The mixture of gases after leaving the proper direct reduction chamber 2 is transferred through at least one filter, separating the zinc from the gas mixture, which is later filtered through a filter assembly.

The reduced iron together with a post-reaction slag after leaving the proper direct reduction chamber 2 in introduced into the melting furnace 3 using a screw conveyor 15, in which it is heated to the temperature of at least 1500 degrees C, and the furnace 3 structure enables the separation of metallic iron from the remaining product components, using a difference in density. The output material in the form of pure, liquid iron is received continually from the melting furnace 3.

The whole process according to the invention takes place in a closed, hermetically tight space.

The apparatus/ installation according to the invention contains an installation/ an apparatus for de-oiling steelworks waste according to the invention P-395190, an apparatus for the decomposition of polymer waste 7, a condensing block 11, a buffer tank 12, the initial direct reduction chamber 1, the proper direct reduction chamber 2 and the melting furnace 3. In the de-oiler heating chamber 4 according to P-395190 a palette conveyor is located, which transfers the whole length of oily steelworks waste below the heating plate of the de-oiler 4 heating chamber, in which the decomposition and the evaporation of the mixture of hydrocarbons and water vapour takes place during the transport through the following areas:
- The dosing area
- The water vapour reception area
- The heating area
- The end products reception area, which is connected directly to the initial direct reaction chamber 1 together with the installation 7 for the decomposition of polymer waste, in which the disintegrated input material- polymer waste is continuously transferred using a cell dispenser 8 onto the tray conveyor and it is subject to thermal processing, involving the recovery of hydrocarbon compounds; such thermal processing is a two-stage process, and it takes place at least in one pre-processing chamber- the melting crucible 9, where the charge material is plasticised and liquefied through the supply of thermal energy, after which it is continually transferred to at least one final processing chamber- the evaporator 10, where under the full pyrolysis process liquid polymers are subject to decomposition consisting in the breaking of long, multi-particle chains of hydrocarbons into shorter chains with carbon atom quantity corresponding to respective gas and liquid hydrocarbon fractions.

The installation 7 for the decomposition of polymer waste is equipped with a condensing block 11, in which the hydrocarbon fractions are separated into a liquid and a gas one, and the condensing block 11 is equipped with the directly connected buffer tank 12 for gas fraction with C1-C4 hydrocarbon content; such buffer tank 12 is connected to the flow reactor 6, in which the C1-C4 gas fractions are converted into H2/CO synthesis gas. The flow reactor 6 is equipped with the buffer tank 13 of the flow reactor, connected to the initial direct reaction chamber 1. The connection fittings of the flow reactor buffer tank 13 are equipped with the heat sources that heat up the synthesis gas transferred to the initial direct reaction chamber 1.

The initial direct reaction chamber 1 has a form of a shaft equipped with alternately placed shelves 18 and it has its own heating system; the initial direct reaction chamber 1 is connected by means of a cell conveyor with the steelworks waste de-oiling apparatus/ installation according to the invention P-395190, and the structure of the initial direct reaction chamber 1 contains the synthesis gas connection.

The initial direct reaction chamber 1 is directly connected to the proper direct reaction chamber 2, inside which a rotating drum 14 is located, preferably equipped with the transferring blades. The rotating speed of the drum 14 is regulated by means of a controller, connected to the engine propelling the drum. The rotating drum 14 is located inside the roller on the surface of which the heating system is located, which is the source of energy required for conducting the DRI process. The operation of the heating system is controlled by the control system, which ensures the maintenance of a fixed set temperature inside the rotating drum 14. The proper direct reaction chamber 2 is equipped with the discharge of volatile substances of the direct reaction, and the outlet of the proper direct reaction chamber is connected to the melting furnace 3 by means of a screw conveyor 15.

The melting furnace 3 has a syphon structure; it is made from a U-shaped tube, preferably with the inside diameter of 500 mm. The lowest melting furnace 3 point is equipped with the discharge valve, and the pure iron and slag outlets 16 are located between the discharge valve and the upper furnace 3 edge. The pure iron outlet 16 and slag outlet 17 are not located on the same "arm" of the U-shaped furnace. The slag outlet 17 is located below the melted iron surface, above the entry to the melting furnace 3, and the melted iron outlet 16 is located on the second furnace 3 "arm"; thus the outlet of the metallically pure iron is not located at the same height as the slag outlet on the first furnace "arm", but below this level.

The direct reduction method according to the invention offers the possibility of processing all types of steelworks waste, and most importantly zinc containing waste. At the same time it allows for the use of polymer waste, mainly originating from plastics, for the production of the reducing medium, i.e. the synthesis gas. The manner of introduction of reagents of the DRI process into the reduction chamber, consisting in continuous and repeatable dosing in the established stoichiometric proportions per time unit offers the possibility of process control at each stage of its execution. Moreover, it enables process interruption in a situation of fault at each process stage and the resumption of production at the shortest possible time. High degree of material disintegration ensures significant proper surface and thus the active surface of the process, thanks to which the unit material reduction process can be executed in the shortest possible time at the highest reaction degree. Low level of general energy outlays under the process is possible thanks to the fact that the substrates are introduced into the area of the reaction chamber at the temperature close to the optimum DRI process temperature, preferably at the temperature of 800 degrees C. It should be remembered that the reaction temperature is acquired by the steelworks waste in the de-oiling process and by the synthesis gas in the process of gas conversion of the C1-C4 mixture of the polymer waste decomposition product.

## Claims

1. The method of direct reduction of iron oxides, in which the in which the charge material is purified of petroleum derivative and mineral contaminants in the chamber of the apparatus and the installation according to the invention P-395190, in which the heating chamber of the de-oiler has at least the following separate areas:
• The dosing area
• The water vapour reception area
• The heating area
• The end products reception area, after which the output material reduced to iron is melted; the method is **characterised in that** the purified charge material in the form of purified and fully de-oiled steelworks waste is collected in the tank (5) and it is introduced into the initial direct reduction chamber (1), while simultaneously introducing the synthesis gas into that chamber, after which the mixture of the charge material and the synthesis gas is transferred to the proper direct reduction chamber (2), from which volatile substrate reaction compounds are removed after the reduction, and the product obtained after the direct reduction process is later introduced into the melting furnace (3), in which the metallic fraction, preferably the iron one is separated from the solid waste in the form of slag.

2. The method according to claim 1, **characterised in that** the charge material in the form of metal oxides, and especially iron oxides is heated to the temperature of between 500 and 1000 degrees C, preferably to 800 degrees C.

3. The method according to claim 1 or 2, **characterised in that** the synthesis gas is removed directly from the installation for decomposition of polymer waste (7), in which the disintegrated input material- polymer waste is continuously transferred using a cell dispenser (8) onto the tray conveyor and it is subject to thermal processing, involving the recovery of hydrocarbon compounds; such thermal processing is a two-stage process, and it takes place at least in one pre-processing chamber- the melting crucible (9), where the charge material is plasticised and liquefied through the supply of thermal energy, after which it is continually transferred to at least one final processing chamber- the evaporator (10), where under the full pyrolysis process liquid polymers are subject to decomposition consisting in the breaking of long, multi-particle chains of hydrocarbons into shorter chains with carbon atom quantity corresponding to respective gas and liquid hydrocarbon fractions, and in the condensing block (11) of this installation the hydrocarbon fractions are separated into a liquid and a gas one, while the gas fraction with C1-C4 hydrocarbon content is collected in the buffer tank (12) and it is transferred continuously to the flow reactor (6), in which the C1-C4 gas fractions are converted into H2/CO synthesis gas; thus obtained synthesis gas is pumped into the buffer tank (13) and then it is heated and introduced into to the initial direct reaction chamber (1).

4. The method according to claim 3, **characterised in that** the synthesis gas is heated to the temperature of between 400 and 800 degrees C.

5. The method according to claim 1, 2, 3 or 4, **characterised in that** the synthesis gas after the introduction into the initial direct reaction chamber (1) is further heated together with the charge material.

6. The method according to claim 5, **characterised in that** the substrates are heated to the temperature not exceeding 1050 degrees C, which however should not be lower than 900 degrees C.

7. The method according to claim 1, 2, 3, 4, 5, or 6, **characterised in that** the synthesis gas together with the charge material before its introduction into the proper direct reduction chamber (2) passes through the initial direct reaction chamber (1) equipped with the cascade conveying system and its own heating system.

8. The method according to claim 1, 2, 3, 4, 5, 6, or 7, **characterised in that** the synthesis gas and the charge material is introduced into the initial direct reduction chamber (1) in stoichiometric quantities, resulting from iron oxides reduction equations.

9. The method according to claim 1, 2, 3, 4, 5, 6, 7, or 8, **characterised in that** the mixture of the synthesis gas and the charge material is introduced into the proper direct reduction chamber (2), and time during which the unit iron oxides mass is transferred in the proper direct reduction chamber is the function of the angle of the proper direct reduction chamber (2) inclination and the rotating speed of the drum (14) of the proper direct reduction chamber (2), while the transferring speed of the unit mass of iron oxides correlates with the transferring speed of the unit volume of synthesis gas, as a result of which both speeds are equal, thus forming the theoretical suspension disc, in which the synthesis gas and iron oxides are in the proper stoichiometric ratio, ensuring the full reduction.

10. The method according to claim 1, 2, 3, 4, 5, 6, 7, 8, or 9, **characterised in that** the unit mass of iron oxides is maximally dispersed in the theoretical suspension disc.

11. The method according to claim 1, 2, 3, 4, 5, 6, 7, 8, 9, or 10, **characterised in that** the volatile substances released from the mixture of synthesis gas and the charge material are transferred to the filtering device and to the water scrubber while it passes through the proper direct reduction chamber (2).

12. The method according to claim 11, **characterised in that** the volatile substances are removed from the proper direct reduction chamber (2), in which the temperature is at least 900 degrees C.

13. The method according to claim 1, 2, 3, 4, 5, 6, 7, 8, 9, 10, 11, or 12, **characterised in that** the reduced metals obtained as a result of the reaction of synthesis gas and the charge material after leaving the proper direct reduction chamber (2) are introduced into the melting furnace (3) using a screw conveyor (15) and they are heated to the temperature of between 1500 and 1650 degrees C, preferably to 1500 degrees C; the furnace structure causes the separation of the melted metal fraction depending on their density into iron fractions and other metal fractions as well as the remains in the form of previously unreduced ferrous zinc oxides, which are a part of the slag.

14. Thee method according to claim 1, 2, 3, 4, 5, 6, 7, 8, 9, 10, 11, 12, or 13, **characterised in that** the process according to the invention takes place in the closed, hermetically tight space.

15. The apparatus/ the installation according to the invention **characterised in that** it contains the installation/ an apparatus for de-oiling steelworks waste with the chamber (4) according to the invention P-395190, the installation (7) for the decomposition of polymer waste, a flow reactor (6), the initial direct reduction chamber (1), the proper direct reduction chamber (2), the outlet of volatile substances and the melting furnace (3).

16. The apparatus according to claim 15 **characterised in that** the installation for the decomposition of polymer waste is equipped with the condensing block (11) and the buffer tank (12) directly connected to it for gas fractions with the hydrocarbon contents C1-C4; the buffer tank (12) is connected to the flow reactor (6), in which the conversion of C1-C4 gas fractions into H2/CO synthesis gas takes place, and the flow reactor (6) is equipped with the buffer tank (13) of the flow reactor (6), connected to the initial direct reaction chamber (1).

17. The apparatus according to claim 15 **characterised in that** the connection fittings of the flow reactor (6) buffer tank (13) to the initial direct reaction chamber (1) are equipped with the heat sources that heat up the synthesis gas transferred to the initial direct reaction chamber (1).

18. The apparatus according to claim 15, 16, or 17, **characterised in that** the initial direct reaction chamber (1) has a form of a shaft equipped with alternately placed shelves (18), which is connected by means of the dispenser of the dosing system with the installation (4) for de-oiling of steelworks waste according to the invention P-395190, and the structure of the shelves (18) located in the chamber contains the synthesis gas connection.

19. The apparatus according to claim 15, 16, 17, or 18, **characterised in that** the initial direct reaction chamber (1) is directly connected to the proper direct reduction chamber (2), inside which the rotating drum (14) equipped with the transferring blades is installed.

20. The apparatus according to claim 19, **characterised in that** the rotating drum (14) is located inside the roller on the surface of which the heating system is located, which is the source of energy required for conducting the DRI process, and the operation of the heating system is controlled by the control system, which ensures the maintenance of a fixed set temperature inside the rotating drum (14).

21. The apparatus according to claim 15, 16, 17, 18, 19, or 20, **characterised in that** the proper direct reaction chamber (2) is connected to the melting furnace (3) by means of a screw conveyor(15).

22. The apparatus according to claim 15, 16, 17, 18, 19, 20, or 21, **characterised in that** the melting furnace (3) has a syphon structure and it is made from a U-shaped tube, the lowest melting point of which is equipped with the discharge valve, and the pure iron outlets (16) and slag outlets are located between the discharge valve and the upper furnace edge.

23. The apparatus according to claim 22, **characterised in that** the inside diameter of the furnace is between 400 mm and 1000 mm, while the pure iron and slag outlets are not located on the same "arm" of the U-shaped furnace.

24. The apparatus according to claim 22, or 23, **characterised in that** the slag outlet (17) is located below the melted iron surface, on the arm connected with the screw conveyor (15), while the melted iron outlet (16) is not located at the same height as the slag outlet on the first furnace "arm", but below this level.
